(19) Europäisches Patentamt / European Patent Office / Office européen des brevets

(11) **EP 2 520 900 B1**

(12) **FASCICULE DE BREVET EUROPEEN**

(45) Date de publication et mention
de la délivrance du brevet:
**18.12.2013 Bulletin 2013/51**

(51) Int Cl.:
***G01C 19/5762*** *(2012.01)*

(21) Numéro de dépôt: **12165811.6**

(22) Date de dépôt: **26.04.2012**

(54) **Gyromètre a capacités parasites reduites**

Gyroskop mit reduzierter parasitärer Kapazität

Gyroscope with reduced parasitic capacitance

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.05.2011 FR 1153732**

(43) Date de publication de la demande:
**07.11.2012 Bulletin 2012/45**

(73) Titulaire: **Commissariat à l'Énergie Atomique et aux Énergies Alternatives
75015 Paris (FR)**

(72) Inventeurs:
• **Walther, Arnaud
  38000 GRENOBLE (FR)**
• **Diem, Bernard
  38130 ECHIROLLES (FR)**
• **Robert, Philippe
  38000 GRENOBLE (FR)**
• **Willemin, Jérôme
  38210 TULLINS (FR)**

(74) Mandataire: **Ilgart, Jean-Christophe et al
BREVALEX
95 rue d'Amsterdam
75378 Paris Cedex 8 (FR)**

(56) Documents cités:
**US-A1- 2008 236 280     US-A1- 2009 241 662**

• **TSUCHIYA T ET AL: "Vibrating gyroscope consisting of three layers of polysilicon thin films", SENSORS AND ACTUATORS A, ELSEVIER SEQUOIA S.A., LAUSANNE, CH, vol. 82, no. 1-3, 1 mai 2000 (2000-05-01), pages 114-119, XP004198248, ISSN: 0924-4247, DOI: 10.1016/S0924-4247(99)00371-4**

**Description**

**DOMAINE TECHNIQUE ET ART ANTÉRIEUR**

La présente invention se rapporte à un gyromètre MEMS (mircoelectromechanical systems) et NEMS (nanoelectromechanical systems) à détection capacitive, présentant des capacités parasites réduites.

La présente invention appartient au domaine des gyromètres destinés à détecter des forces de Coriolis issues des rotations autour d'un axe contenu dans le plan du gyromètre.

Les gyroscopes comportent une masse inertielle mise en mouvement selon un axe, dit d'excitation, qui se trouve dans le plan ou autour d'un axe se trouvant hors plan; les mouvements hors plan induits par les forces de Coriolis issues des rotations autour d'un axe dans le plan sont détectés.

Dans le cas d'une détection capacitive, les mouvements hors plan sont détectés au moyen d'électrodes. Les électrodes peuvent être verticales.

Cependant la réalisation de telles électrodes est complexe et présente un coût élevé. En outre, certaines des structures présentent des variations de capacité non parfaitement linéaires et des lois de variation complexes.

Selon une autre technique, les électrodes sont horizontales et une variation d'entrefer est mesurée entre l'électrode et la masse inertielle. La variation d'entrefer est non linéaire cependant la loi de variation est bien connue.

L'électrode peut se trouver sur le substrat en dessous de la masse vibrante. Un tel gyromètre est décrit dans le document P. Merz et al, "Impact Of Si DRIE On Vibratory MEMS Gyroscope Performance", TRANSDUCERS & EUROSENSORS '07, p 1187-1190, 2007.

Cependant ces structures présentent une capacité parasite élevée. En effet, en plus de la capacité utile entre l'électrode et la partie active qui sert à la détection des mouvements hors plan de la partie de détection, apparaît une capacité parasite entre l'électrode et le substrat sur toute la surface de l'électrode, ainsi que sur la surface des pistes et plots de contact. La capacité parasite est donc potentiellement plus grande que la capacité nominale, d'autant plus que l'isolant entre le niveau électrode et le substrat présente un coefficient de permittivité relatif $\varepsilon_r$ plus élevé que l'air (typiquement $\varepsilon_r$ = 3,8 pour le SiO$_2$) qui se trouve entre l'électrode et la partie active.

On rappelle que :

$$C = \frac{\varepsilon_0 \varepsilon_r S}{g}$$

Avec $\varepsilon_0$ la permittivité du vide,

S la surface de la capacité,
g la distance d'entrefer.

Le document T. Tsuchiya et al, "Vibrating gyroscope consisting of three layers of polysilicon thin films", Sensors and Actuators, vol 82, p 114-119, 2000, décrit un gyromètre comportant une masse vibrante suspendue par quatre poutres et disposée entre une électrode inférieure déposée sur le substrat et une électrode supérieure de sorte à réaliser une excitation et une détection différentielle. L'électrode supérieure est formée dans une troisième couche de polysilicium suspendue au dessus de la masse inertielle. Cette couche est très fine.

Ce gyromètre présente également une capacité parasite importante entre l'électrode inférieure et le substrat. En outre, si une meilleure sensibilité est souhaitée, l'épaisseur de la deuxième couche doit être augmentée, les fréquences de résonance des mouvements dans le plan et hors plan vont alors évoluer de manière différente.

En outre, un gyromètre comportant une électrode de détection fixée sur une partie supérieure du substrat, au-dessus de la masse vibrante, est décrit dans les demandes de brevet US2009/0241662 et US 2008/0236280.

**EXPOSÉ DE L'INVENTION**

C'est par conséquent un but de la présente invention d'offrir un gyromètre à détection des mouvements hors plan présentant des capacités parasites réduites et de réalisation simplifiée. La réduction des capacités parasites permet en particulier de réduire le bruit des mesures capacitives effectuées par le gyromètre.

Le but précédemment énoncé est atteint par un gyromètre comportant une masse inertielle formée d'au moins une partie d'excitation et d'au moins une partie de détection, la partie d'excitation étant reliée mécaniquement à la partie de détection et lui transmettant tout ou partie du mouvement d'excitation, des moyens de détection du mouvement hors plan de la partie de détection formés par une électrode disposée au dessus de la partie de détection par rapport au substrat, ladite électrode étant maintenue au dessus de la partie de détection au moyen de piliers traversant la masse inertielle.

Ainsi, les zones du gyromètre susceptibles de former avec l'électrode, une capacité parasite, sont essentiellement les plots de contacts, les pistes, les piliers et éventuellement la partie d'excitation. La capacité parasite du gyromètre selon l'invention est donc notablement réduite.

Le rapport signal sur bruit étant limité par la capacité parasite, la réduction de la capacité parasite permet également de réduire le bruit de mesure.

Avantageusement, grâce à la mise en oeuvre de piliers traversant la partie de détection et en réalisant une électrode dont la surface est uniquement en regard de la partie de détection, la capacité parasite est encore réduite puisqu'il n'y a plus de capacité parasite apparaissant entre l'électrode et la partie d'excitation.

En général les gyromètres MEMS OU NEMS sont disposés dans une cavité dans laquelle un vide est généré. En mettant en oeuvre des piliers pour soutenir l'électrode, la disposition de l'électrode devient indépendante de celle du capot formant la cavité du gyromètre. Il est alors possible d'augmenter la taille de la cavité et donc le niveau de vide sans modifier la position de l'électrode de détection par rapport à la partie de détection.

La présente invention a alors pour objet un gyromètre comportant un substrat et une masse inertielle suspendue au dessus du substrat, la masse inertielle comportant au moins une partie d'excitation et au moins une partie de détection, des moyens de mise en mouvement de la partie d'excitation dans au moins une direction contenue dans le plan de ladite masse inertielle, et des moyens de détection capacitifs du mouvement de ladite partie de détection en dehors du plan de ladite masse, lesdits moyens de détection capacitifs comportant au moins une électrode suspendue, dite électrode de détection, disposée au-dessus de la partie de détection qui est située à l'opposé du substrat de sorte à former un condensateur à capacité variable avec ladite partie de détection, ladite électrode étant maintenue au-dessus de ladite partie de détection par au moins un pilier traversant la masse inertielle.

Dans la présente demande, on entend par "au-dessus de la partie de détection" le fait que l'électrode est au moins en partie au dessus de la partie de détection ; l'électrode de détection peut donc déborder de cette partie ou être de dimension plus petite que celle-ci.

De manière préférentielle, la projection orthogonale selon l'axe orthogonal au plan du gyromètre sensiblement de chaque point de l'électrode se situe sur la partie de détection, la projection de l'électrode de détection ne débordant pas de la partie de détection. De manière encore préférée, l'électrode de détection présente une surface sensiblement égale à celle de la partie de détection, permettant de maximiser la sensibilité de détection.

Le gyromètre comporte un ou des passage(s), par lesquels le ou les piliers peut ou peuvent traverser la partie de détection et/ou la partie d'excitation dans des zones adjacentes aux bords de la partie de détection.

De préférence, le jeu entre les bords parallèles des piliers et des passages dans la direction d'excitation est de 0,5 $\mu$m à 1 $\mu$m supérieur à l'amplitude d'excitation.

Par exemple, les piliers présentent des côtés mesurant entre 10 $\mu$m et 100$\mu$m et le jeu entre les bords parallèles des piliers et des passages est compris entre 1 $\mu$m à 10 $\mu$m.

Dans un exemple de réalisation, la masse inertielle comporte une partie d'excitation et au moins deux parties de détection, une première partie de détection apte à se déplacer le long de la direction d'excitation par l'intermédiaire de la partie d'excitation et une deuxième partie de détection immobilisée dans le direction d'excitation et solidaire en mouvement de la première partie de détection. Avantageusement, le ou les piliers traversent la deuxième partie de détection. Cependant cet exemple n'est pas limitatif, les piliers pouvant traverser également la première partie de détection.

La masse inertielle peut comporter au moins deux parties de détection, l'électrode de détection étant disposée au-dessus de l'une ou l'autre des parties de détection.

Dans un exemple de réalisation, la masse inertielle comporte au moins deux parties de détection destinées à résonner en phase, l'électrode de détection étant disposée au-dessus des deux parties de détection.

Dans un autre exemple de réalisation, la masse inertielle comporte au moins deux parties de détection destinées à résonner en antiphase, ledit gyromètre comportant deux électrodes de détection disposées chacune au-dessus d'une partie de détection, les deux électrodes de détection détectant séparément les déplacements des parties de détection en regard de celles-ci.

Le gyromètre peut comporter deux masses inertielles couplées mécaniquement au moins selon un mode d'excitation et deux électrodes de détection disposées chacune au dessus d'une partie de détection de chacune des masses inertielles, les deux électrodes de détection détectant séparément les déplacements des parties de détection en regard de celles-ci.

Dans une variante de réalisation, la masse inertielle peut comporter une partie d'excitation en forme de disque, ladite partie d'excitation étant mobile autour de l'axe dudit disque, et plusieurs parties de détection montées mobiles à l'intérieur de la partie d'excitation.

Le gyromètre peut comporter un capot de sorte à délimiter une cavité hermétique autour de la au moins une masse inertielle et de la au moins une électrode de détection, un vide étant généré dans ladite cavité.

La présente invention a également pour objet un système de mesure comportant un gyromètre selon la présente invention et un gyromètre de détection de rotations d'axe hors plan.

Le système de mesure peut comporter des électrodes de détection perpendiculaires au plan du gyromètre pour détecter le déplacement dans le plan de ladite au moins une partie de détection.

De manière avantageuse, les pistes qui relient les électrodes aux plots sont suspendues et réalisées en même temps que l'électrode de détection.

La présente invention a également pour objet un système de mesure comportant au moins gyromètre selon la présente invention et au moins un accéléromètre. L'accéléromètre est par exemple un accéléromètre capacitif destiné à détecter des accélérations hors plan et comportant au moins une électrode de détection d'une accélération hors plan, contenue dans le plan et/ou un accéléromètre capacitif destiné à détecter des accélérations dans le plan et comportant au moins une électrode perpendiculaire au plan.

La au moins une électrode contenue dans le plan est avantageusement réalisée simultanément à l'électrode de détection dudit gyromètre.

La présente invention a également pour objet un procédé de réalisation d'un gyromètre selon la présente invention, comportant, à partir d'un élément comprenant une couche d'oxyde déposée sur un substrat et recouverte d'une couche active; les étapes :

- dépôt d'une première couche de protection de la couche active contre l'oxydation,
- gravure de la couche de protection pour libérer la couche active en au moins une première zone,
- oxydation thermique et croissance de l'oxyde au niveau de la première zone de la couche active libérée de sorte à former une surépaisseur d'oxyde au niveau de ladite première zone,
- dépôt d'une deuxième couche de protection sur la surépaisseur d'oxyde,
- gravure de la couche active pour former des tranchées atteignant la couche d'oxyde,
- dépôt d'une couche de bouchage recouvrant la couche active et obturant les tranchées,
- gravure de ladite couche de bouchage pour libérer au moins une deuxième zone de la couche active,
- formation de l'électrode de détection de sorte que l'électrode repose sur ladite deuxième zone,
- libération de la masse inertielle et de l'électrode.

Par exemple, la première et/ou la deuxième couche de protection est (sont) en $Si_3N_4$.

La couche de bouchage recouvrant la couche active et obturant les tranchées est par exemple en PSG.

Le procédé peut comporter une étape de réalisation d'au moins un plot de contact, après la réalisation de l'électrode de détection et d'au moins une piste conductrice électrique non suspendue reliée à l'électrode de détection, le plot de contact étant réalisé sur la piste conductrice.

La piste conductrice électrique est de préférence réalisée simultanément à la réalisation de l'électrode de détection.

L'élément est par exemple un substrat SOI et l'électrode de détection est en polysilicium.

L'étape de libération est, par exemple obtenue au moyen d'une gravure humide du PSG et d'une gravure de la couche d'oxyde.

## BRÈVE DESCRIPTION DES DESSINS

La présente invention sera mieux comprise à l'aide de la description qui va suivre et des dessins en annexes sur lesquels :

- la figure 1A est une vue de dessus d'un exemple de réalisation d'un gyromètre selon la présente invention,
- la figure 1B est une partie d'une vue en coupe de la figure 1A le long du plan AA,

- la figure 2 est une vue de dessus partielle d'un autre exemple de réalisation d'un gyromètre selon la présente invention,
- la figure 3A est une vue de dessus de la masse inertielle de la figure 1A,
- la figure 3B est une vue de dessus de la masse inertielle de la figure 1A dans en mode d'excitation,
- la figure 3C est une vue de dessus de la masse inertielle de la figure 1A en mode de détection,
- la figure 4 est une vue en coupe d'un gyromètre selon la présente invention munie d'une cavité de scellement,
- la figure 5A est une vue en perspective d'un autre exemple de gyromètre selon la présente invention,
- la figure 5B est une vue en perspective schématique du gyromètre de la figure 5A en mode d'excitation,
- la figure 5C est une vue en perspective schématique du gyromètre de la figure 5A en mode de détection,
- les figures 6A à 6H sont des représentations schématiques de différentes étapes d'un exemple de procédé de réalisation d'un gyromètre selon la présente invention,
- la figure 7 est une vue en perspective d'un autre exemple de gyromètre selon la présente invention.

## EXPOSÉ DÉTAILLÉ DE MODES DE RÉALISATION PARTICULIERS

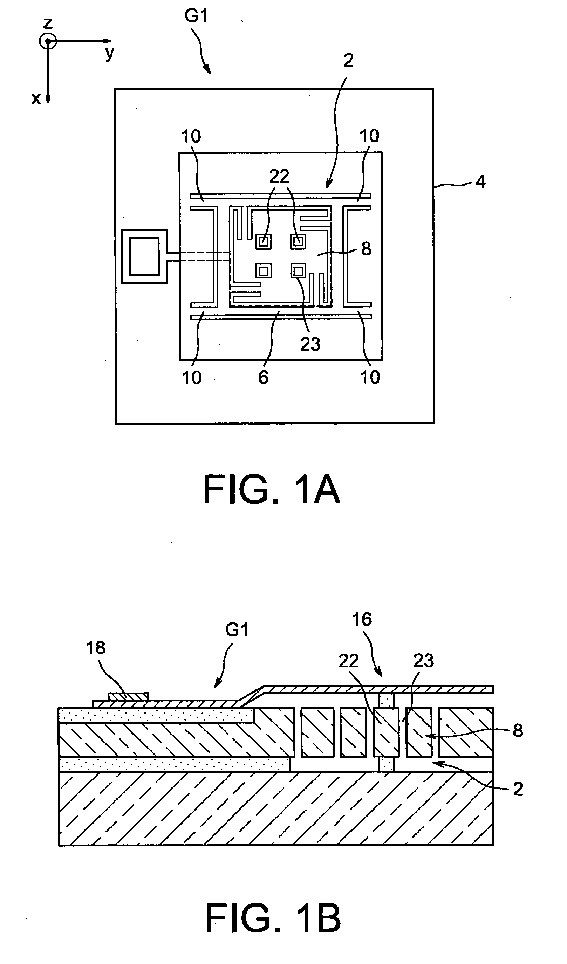

Sur la figure 1A, on peut voir un gyromètre G1 selon un exemple de réalisation de la présente invention comportant une masse inertielle 2 suspendue au-dessus d'un substrat 4.

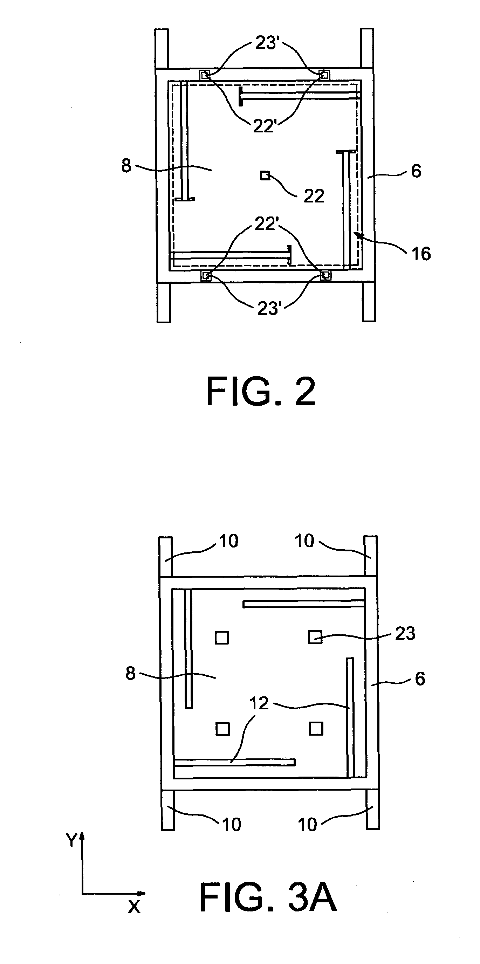

La masse inertielle 2, représentée seule sur la figure 3A, comporte une première partie 6, dite partie d'excitation, et une deuxième partie 8, dite partie de détection.

La partie d'excitation 6 est destinée à être mise en mouvement le long d'un axe X contenu dans le plan du gyromètre. La partie de détection 8 est destinée à être mise en mouvement le long d'un axe Z par les forces de Coriolis, l'axe Z étant perpendiculaire à l'axe X et à la feuille dans la représentation de la figure 1A. Le mouvement de la partie d'excitation 6 est appelé "mouvement dans le plan" et le mouvement de la partie de détection 8 est appelé « mouvement hors plan ».

Un gyromètre destiné à détecter des rotations autour de l'axe X est désigné "gyromètre X".

Le gyromètre Z est destiné à détecter des rotations autour de l'axe Z.

L'axe Y est perpendiculaire aux axes X et Z et contenu dans le plan du gyromètre.

Un gyromètre XY est destiné à détecter des rotations autour des axes X et Y.

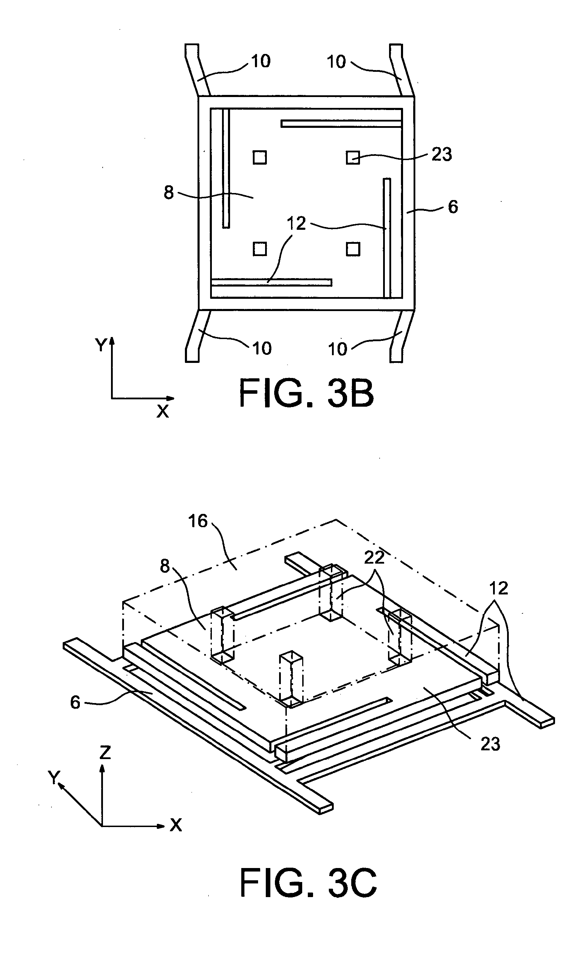

La partie d'excitation 6 forme, dans l'exemple représenté, un cadre suspendu au substrat 4 par quatre poutres rectilignes 10, alignées deux à deux et parallèles entre elles. Sur la figure 3B, on peut voir représentée la masse inertielle en mode d'excitation, les poutres 10 étant en flexion dans le plan et la masse inertielle étant déplacée le long de l'axe X.

La partie de détection 8, de forme rectangulaire, est disposée à l'intérieur du cadre de la partie d'excitation 6 et est suspendue à celui-ci par quatre poutres 12, chacune perpendiculaire à un côté de la partie mobile. Deux poutres situées sur deux côtés consécutifs sont perpendiculaires entre elles.

Sur la figure 3C, la masse inertielle est dans un mode de détection; la partie de détection 8 est alors dans une position décalée par rapport à la partie d'excitation le long de l'axe Z, les poutres 12 étant dans un mode de flexion hors-plan.

Des moyens d'excitation de la partie d'excitation 6 le long de l'axe X sont prévus (non représentés). Ces moyens d'excitation peuvent être du type électrostatique mettre en oeuvre des peignes interdigités, piézoélectrique, magnétique...

En outre, le gyromètre comporte des moyens de détection capacitifs 14 du déplacement de la partie de détection 8. Les moyens de détection capacitifs 14 comportent une électrode 16 disposée au-dessus de la masse inertielle 2 à l'opposé du substrat 4.

L'électrode 16 est visible particulièrement sur la figure 1B; sur la figure 1A celle-ci est représentée en pointillés. L'électrode 16 est reliée électriquement à un circuit de détection (non représenté) au moyen d'un plot de contact 18.

De manière particulièrement avantageuse, la surface de l'électrode 16 est au plus égale à celle de la partie de détection 8 et est uniquement en regard de celle-ci. La projection orthogonale de tout point de l'électrode 16 selon l'axe Z se retrouve dans la partie de détection 8. Dans l'exemple représenté, l'électrode 16 et la partie de détection 8 ont sensiblement la même surface.

De préférence, l'électrode 16 offre la même surface que la partie de détection 8, ainsi la capacité utile est la plus grande possible et la sensibilité est maximisée.

L'électrode 16 est maintenue au-dessus de la masse inertielle au moyen de piliers 22 traversant ladite masse inertielle 2, de sorte que la position de l'électrode 16 par rapport au substrat soit constante.

Dans l'exemple représenté, les piliers 22 sont au nombre de quatre disposés en un rectangle homothétique de la partie de détection 8. Ce nombre et cette disposition ne sont en aucun cas limitatifs, et sont choisies notamment en fonction de la forme et de la surface de la partie de détection et sont ajustés de manière à assurer une raideur suffisante à l'électrode suspendue, notamment de sorte à avoir une fréquence de résonance de l'électrode qui soit très supérieure à la fréquence de mouvement de la masse inertielle.

Les piliers 22 traversent la partie de détection par des passages 23 réalisés dans celle-ci, lesdits piliers 22 étant ancrés sur le substrat.

Avantageusement, les piliers 22 et les passages 23 sont réalisés simultanément par gravure.

Les dimensions des passages et des piliers sont telles qu'il n'y a pas de contact entre les piliers et la partie d'excitation en mode d'excitation dans lequel la partie d'excitation a un déplacement selon X.

Lee jeu entre les bords parallèles des piliers et des passages dans la direction d'excitation est de préférence choisi de 0,5 µm à 1 µm supérieur à l'amplitude d'excitation.

A titre d'exemple, les piliers présentent des côtés mesurant entre 10 µm et 100µm et le jeu entre les bords parallèles des piliers et des passages est compris entre 1 µm à 10 µm.

Comme nous le verrons par la suite lors de la description d'un exemple de procédé de réalisation, le jeu entre les bords des piliers et des passages est limité par la technologie de fabrication et en particulier par les dimensions maximales pouvant être remplies lors de l'étape de bouchage.

Comme cela est représenté sur la figure 1A, de manière particulièrement avantageuse, la surface de l'électrode 16 est sensiblement égale à celle de la partie de détection et est en regard de celle-ci. Elle ne présente alors pas de zone en regard de la partie d'excitation, ce qui réduit les capacités entre l'électrode 16 et la partie d'excitation 6, qui ne sert pas à la détection du mouvement hors plan de la partie de détection.

L'électrode 16 et la partie de détection 8 forme un condensateur à capacité variable, la capacité ici varie en fonction du déplacement de la partie de détection le long de l'axe Z. C'est cette variation de capacité qui permet de déterminer l'amplitude du déplacement de la partie de détection et ainsi de remonter aux forces de Coriolis subies par le gyromètre et donc par le système équipé du gyromètre.

Grâce à la structure du gyromètre de la figure 1A, les capacités parasites sont réduites. Du fait de la position suspendue de l'électrode au-dessus de la masse inertielle, il n'y a pas de capacités parasites entre l'électrode et le substrat, ou alors celles-ci sont très faibles car elles sont limitées aux surfaces d'ancrage des piliers au substrat. En outre la capacité parasite entre l'électrode et la partie d'excitation est réduite, voir nulle. Seules subsistent les capacités parasites entre les plots de contact et le substrat et entre les pistes conductrices électriques et le substrat.

Nous allons maintenant expliquer le fonctionnement en détection du gyromètre de la figure 1A.

La masse inertielle 2 est mise en excitation par l'intermédiaire de la partie d'excitation 6 qui est déplacée par les moyens d'excitation. La masse inertielle se déplace comme représentée sur la figure 3B. En cas d'apparition de forces de Coriolis, la partie de détection 8 a un déplacement hors plan le long de l'axe Z, la modification de la distance entre la partie de détection 8 et l'électrode 16 modifie la capacité du condensateur ainsi formé, cette variation de capacité étant détectée et analysée afin de remonter à la valeur des forces de Coriolis.

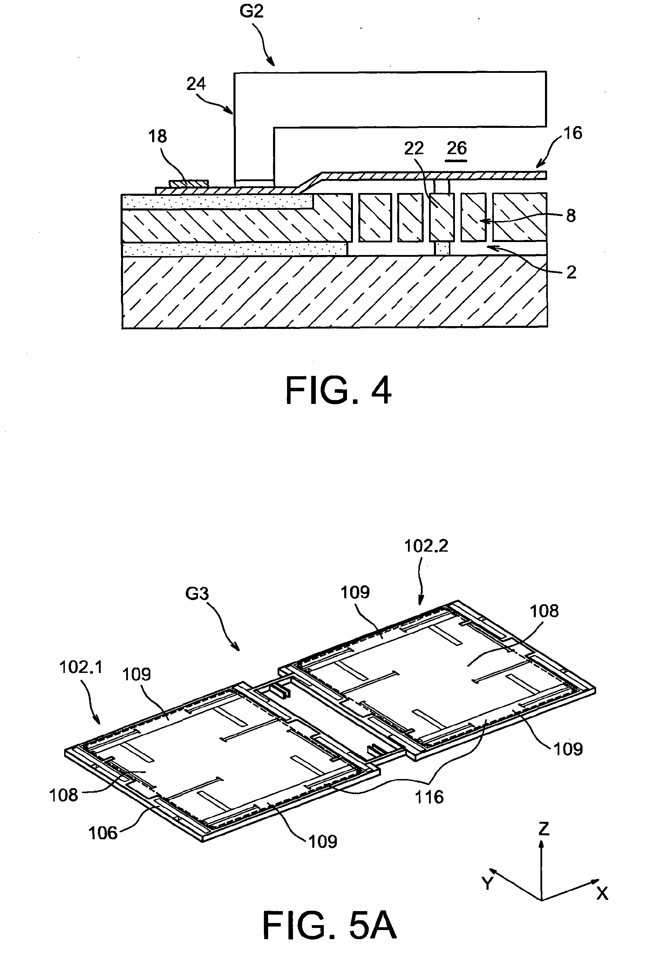

Sur la figure 4, on peut voir un autre exemple de réalisation d'un gyromètre G2 selon la présente invention. Celui-ci comportant un capot 24 recouvrant la masse inertielle, le capot 24 délimitant avec le substrat une cavité étanche 26.

Le capot 24 est scellé sur le substrat. De manière avantageuse un vide est généré pour améliorer le fonctionnement du gyromètre. Grâce à la présente invention, la position de l'électrode par rapport à la partie de détection est indépendante du volume de la cavité 26 formée par le capot 24 et le substrat 4, puisque l'électrode 16 n'est pas portée par le capot 24. Il est alors possible de réaliser des cavités 26 ayant un très grand volume ce qui permet d'obtenir un niveau de vide très élevé. Les niveaux de vide recherchés sont typiquement de $10^{-1}$ mbar à $10^{-3}$ mbar.*

Sur la figure 2, on peut voir un autre exemple d'un gyromètre selon la présente invention, dans lequel les piliers sont au plus près de la partie de détection. Le gyromètre comporte quatre piliers 22' traversant la partie d'excitation 6 dans des zones adjacentes à la partie de détection 8 et un pilier 22 traversant la partie de détection 8 en son centre. L'électrode de détection 16 est représentée en pointillés et sa surface correspond sensiblement à celle de la partie de détection 8. Par exemple, les passages 23' dans la partie d'excitation forment des encoches dans le bord intérieur de la partie de d'excitation 6, ouvertes vers la partie de détection 8.

En variante, aucun pilier ne traverse la partie de détection, l'électrode étant suspendue uniquement par les piliers 22' traversant la partie d'excitation.

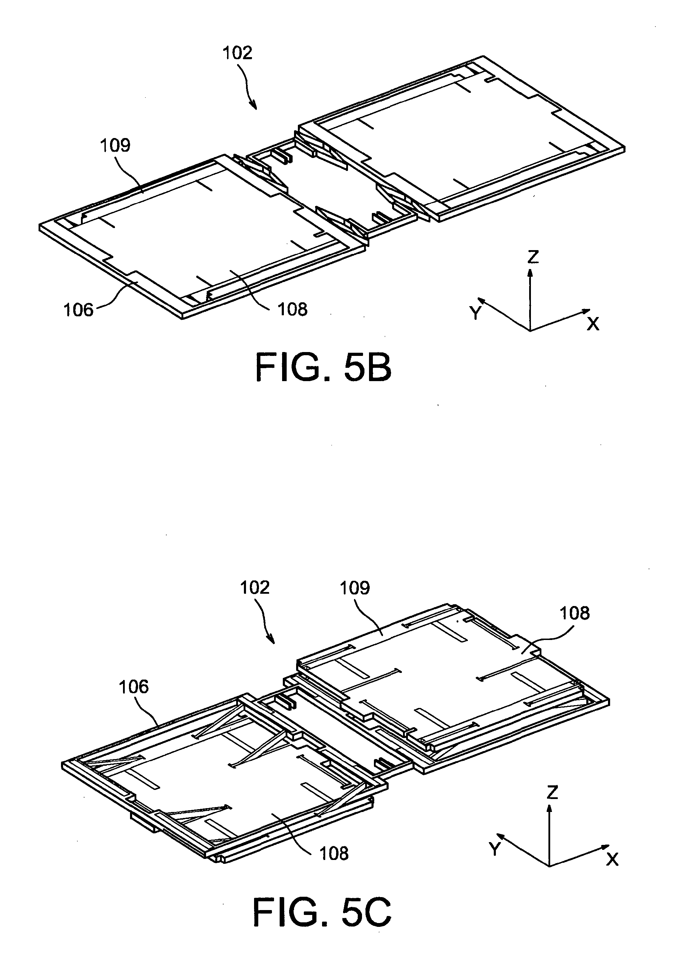

Sur la figure 5A, on peut voir un autre exemple de réalisation d'un gyromètre G3 selon la présente invention. La masse inertielle 102 comporte deux masses 102.1, 102.2, chacune étant composée de trois parties :

- une partie d'excitation 106 qui ne bouge que selon l'axe d'excitation X,
- une première partie de détection 108 qui bouge en excitation de manière solidaire avec la partie d'excitation 106 et qui bouge selon la direction de détection Z lorsqu'elle est soumise à une force de Coriolis, et
- une deuxième partie 109 qui est ancrée selon la direction d'excitation et qui bouge le long de la direction de détection de manière solidaire à la partie de détection 108.

Deux électrodes 116.1, 116.2 représentées en pointillés sont disposées au dessus de chacune des parties de détection 106, afin de détecter séparément les mouvements de chacune de deuxièmes parties de détection qui bougent en antiphase comme peut le voir sur la figure 5C.

De manière préférentielle, les piliers (non représentés) soutenant les électrodes suspendues traversent la deuxième partie de détection qui ne peut se déplacer que le long de l'axe Z. Ainsi, les piliers ne risquent pas d'entrer en contact avec la structure en mode d'excitation le long de l'axe X.

Dans cet exemple de réalisation, les deux parties d'excitation 106 sont reliées par des moyens de liaison de sorte qu'elles vibrent en opposition de phase. Les mouvements de détection des parties de détection 108 induits par la force de Coriolis sont alors également en opposition de phase. Les deux électrodes suspendues permettent la détection des mouvements en opposition de phase de chacune des parties de détection 108.

Dans un autre exemple de réalisation du gyromètre, la masse inertielle comporte une partie d'excitation et deux parties de détection. L'une des parties de détection est reliée à la partie d'excitation de sorte qu'il lui soit transmis tout ou partie du mouvement en excitation. Les deux parties de détection sont reliées de sorte que le mouvement de l'une des masses selon la direction de détection transmet seulement une partie du mouvement à l'autre masse.

Il existe alors deux modes de résonance en détection : l'un où les deux parties résonnent en phase, l'autre où les deux parties résonnent en opposition de phase.

Les moyens de détection peuvent alors comporter soit une ou plusieurs électrodes suspendues au dessus d'une seule des deux parties de détection, l'un ou l'autre des modes de résonance en détection est alors exploité. Dans un autre exemple, les moyens de détection comportent une ou plusieurs électrodes suspendues au dessus des deux parties de détection, les électrodes étant connectées entre elles et fonctionnent comme une électrode unique. Dans cet exemple, on exploite uniquement le mode de résonance en phase.

Dans un autre exemple, les moyens de détection comportent deux électrodes ou deux groupes d'au moins deux électrodes connectées entre elles; chaque électrode ou groupe d'électrodes est suspendu(e) au dessus d'une partie de détection. Les deux électrodes ou deux groupes sont indépendant(e)s les unes des autres. Dans ce cas, on exploite le mode de résonance en opposition de phase. Les piliers sont réalisés dans la partie de détection en face de laquelle se trouve l'électrode qui lui est dédiée.

Avantageusement, plusieurs électrodes connectées entre elles sont mises en oeuvre à la place d'une électrode unique, ce qui permet de minimiser les capacités parasites venant des plots et pistes.

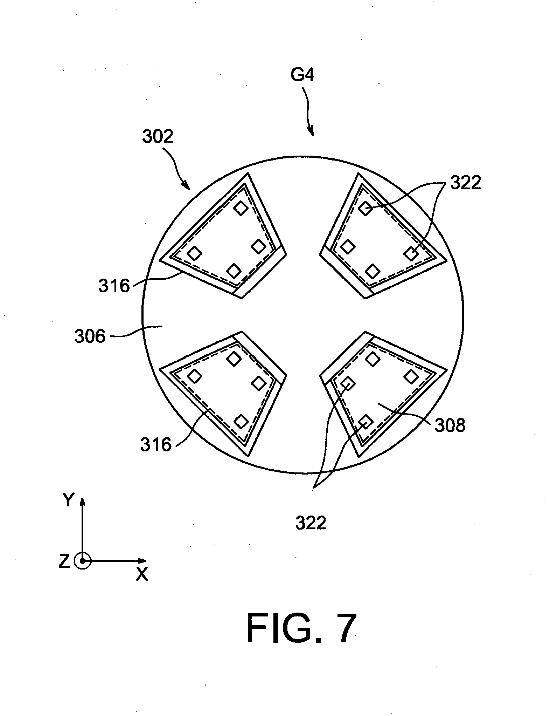

Selon un autre exemple de réalisation d'un gyroscope G4 représenté sur la figure 7, la masse inertielle 302 comporte une partie d'excitation 306 et plusieurs parties de détection 308. Par exemple, la partie d'excitation 306 a la forme d'un disque destiné à être mis en mouvement autour d'un axe Z perpendiculaire au plan du disque. Le disque comporte des découpes réparties autour d'un axe Z, dans lesquelles sont montées les parties de détection, celles-ci étant alors mobiles autour d'un axe contenu dans le plan du disque. Ce gyromètre comporte quatre électrodes de détection 316 (représentées en pointillés) soutenues par des piliers 322 au-dessus de chacune des parties de détection. Les piliers 322 traversent les parties de détections 308; ils sont au nombre de quatre pour soutenir chaque électrode 316.

Par exemple, la masse inertielle comporte trois paires de masses de détection, chaque paire étant associée à des axes de détection différents.

En variante, la masse inertielle comporte plusieurs parties d'excitation reliée entre elles par une structure de couplage mécanique de sorte que toutes les parties d'excitation présentent une fréquence de résonance identique en excitation.

Selon encore un autre exemple de réalisation, la masse inertielle est formée de deux masses couplées au moins selon un mode d'excitation.

Chaque masse comporte une partie d'excitation et une partie de détection. Les masses sont actionnées en opposition de phase en excitation.

Ce gyromètre présente l'avantage d'être relativement insensibles aux accélérations.

En variante, la masse d'excitation pourrait également avoir un degré de liberté hors plan.

Avantageusement, on peut utiliser la ou les électrodes de détection comme électrodes d'actionnement afin de déplacer verticalement la ou les parties de détection de la masse inertielle. Par exemple cette utilisation à des fins d'actionnement verticale de la ou des parties de détection peut permettre d'appliquer une contre-réaction de détection.

Le gyromètre selon l'invention peut être associé à d'autres électrodes présentant par exemples des fonctions d'actionnement, pour fournir une contre-réaction ou un trimming, le trimming étant le fait d'introduire une raideur électrostatique qui permet d'ajuster la fréquence de résonance en détection.

Dans un autre exemple de réalisation, le gyroscope selon la présente invention peut être associé à un gyroscope Z, qui détecte les rotations d'axe hors-plan.

Le gyroscope Z peut être un gyroscope capacitif mettant en oeuvre, des électrodes de détection verticales. Celles-ci sont connectées à un plot de contact et éventuellement connectées entre elles par une piste suspendue. Avantageusement, les pistes sont réalisées en même temps que la ou les électrodes suspendues horizontales selon la présente invention.

Les exemples de réalisation décrits portent sur un gyromètre Y, cependant les gyromètres X à électrodes soutenues par des piliers au dessus de la ou des parties de détection ne sort pas du cadre de la présente invention. Les moyens d'excitation sont adaptés de sorte à déplacer les parties d'excitation le long de l'axe Y.

On peut également envisager d'associer le gyroscope selon l'invention présentant un ou deux axes de détection dans le plan à un ou plusieurs accéléromètres capacitifs. Un gyromètre Z peut également être associé.

L'accéléromètre capacitif peut comporter une électrode suspendue pour la détection des accélérations selon l'axe Z et/ou une ou des électrodes verticales de détection des accélérations dans le plan, la ou les électrodes suspendues et/ou verticales pouvant être connectées aux plots de contact par une piste suspendue. De manière avantageuse, les électrodes suspendues et/ou les pistes suspendues sont réalisées simultanément à l'électrode suspendue du gyroscope.

Nous allons maintenant décrire un exemple d'un procédé de réalisation particulièrement avantageux du gyroscope selon la présente invention, permettant par exemple la fabrication du gyroscope de la figure 1A.

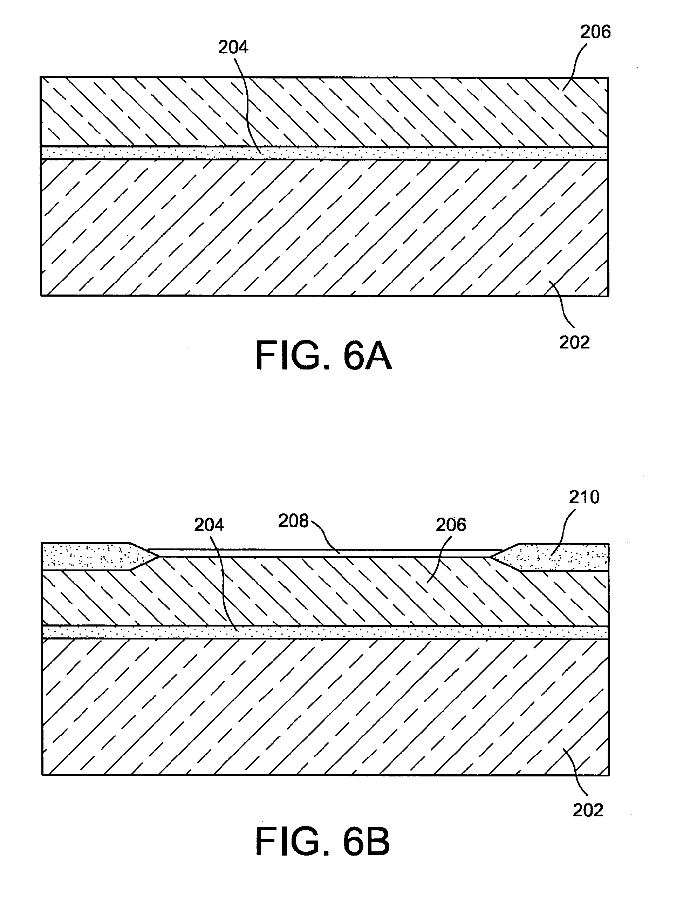

Différentes étapes de ce procédé de réalisation sont représentées schématiquement sur les figures 6A à 6H.

Lors d'une première étape, on réalise le substrat sur et dans lequel sera réalisé le gyromètre. Par exemple il s'agit d'un substrat SOI ("Silicon on Insulator" en anglais) ou Silicium sur isolant. Celui-ci comporte une couche de base en silicium 202, une couche d'oxyde de silicium enterrée 204, d'épaisseur comprise entre 0,5 $\mu$m et 5 $\mu$m par exemple. Il comporte également une couche de silicium 206 déposée sur la couche d'oxyde enterrée 204 d'épaisseur comprise entre 1 $\mu$m et 100 $\mu$m par exemple. Ce substrat est représenté sur la figure 6A.

Lors d'une étape suivante, on effectue un dépôt d'une couche de nitrure $Si_3N_4$ 208 sur toute la surface de la couche de silicium 202. Une couche de résine est ensuite déposée sur la couche de nitrure et une lithographie de celle-ci est réalisée afin de délimiter les zones de nitrure à graver.

La couche de nitrure est ensuite gravée, libérant des zones d'extrémité de la couche de silicium 206. Cette zone libérée forme un cadre sur le contour de la surface du substrat. On effectue ensuite un décapage de la résine.

Puis, on réalise une étape d'oxydation thermique provoquant la formation d'une surépaisseur oxyde thermique 210 au niveau de la zones d'extrémité libérée de la couche de silicium 206. Sur la figure 1A, on peut voir cette surépaisseur 210 formant un cadre autour de la masse inertielle.

On obtient l'élément représenté sur la figure 6B.

Un décapage de la surface est ensuite effectué afin de supprimer l'oxynitrure s'étant formé sur la zone de nitrure restante 208 lors de l'oxydation thermique. Ce décapage a pour effet de réduire faiblement l'oxyde thermique 210.

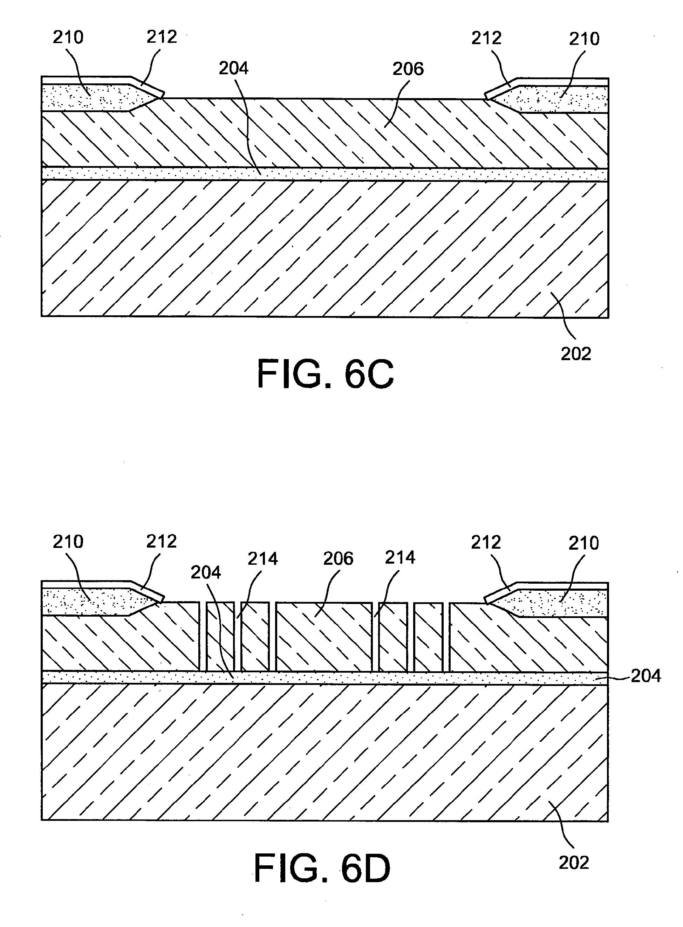

Ensuite, on réalise un dépôt d'une couche de nitrure 212 recouvrant la surépaisseur d'oxyde thermique 210 réalisées à l'étape précédente et la zone de nitrure 208. On dépose une couche de résine sur la couche de nitrure et une lithographie de celle-ci est réalisée de sorte à libérer la portion de nitrure 208 située entre les deux portions d'oxyde thermique 210. Cette portion libérée est ensuite gravée afin de l'éliminer. Un décapage de la résine est ensuite effectué. L'élément obtenu est visible sur la figure 6C.

Lors d'une étape suivante, on délimite au moyen d'une résine et d'une lithographie des zones qui subiront une gravure profonde. On réalise ensuite la gravure profonde de la couche de silicium 206, par exemple par gravure profonde par ions réactifs ou DRIE ("deep reactive-ion etching" en anglais), pour former des tranchées 214. La gravure atteint la couche d'oxyde 204. L'élément obtenu est visible sur la figure 6D.

Lors d'une étape suivante, on effectue un dépôt d'une couche de verre de silice phosphorée ou PSG 216 ("Phosphorus Silicate Glass" en terminologie anglosaxonne) sur la surface de l'élément de la figure 6D, par exemple d'une épaisseur de 4 $\mu$m. Un recuit de fluage est ensuite réalisé afin de faire fluer le PSG et que celui-ci pénètre dans les tranchées 214 et les obturent. Il n'est pas nécessaire que les tranchées soient complètement remplies. En variante, d'autres oxydes peuvent être utilisé pour remplir les tranchées. On peut utiliser de la silice (SiO2) avec une méthode de dépôt qui assure que la silice se dépose sur les bords des tranchées de gravure et bouche les tranchées

Une couche de résine est déposée sur le PSG se situant en surface, celle-ci subit une lithographie afin de délimiter des zones de gravure du PSG. Une gravure du PSG est ensuite réalisée pour libérer des zones 218 de la surface de la couche de silicium 206.

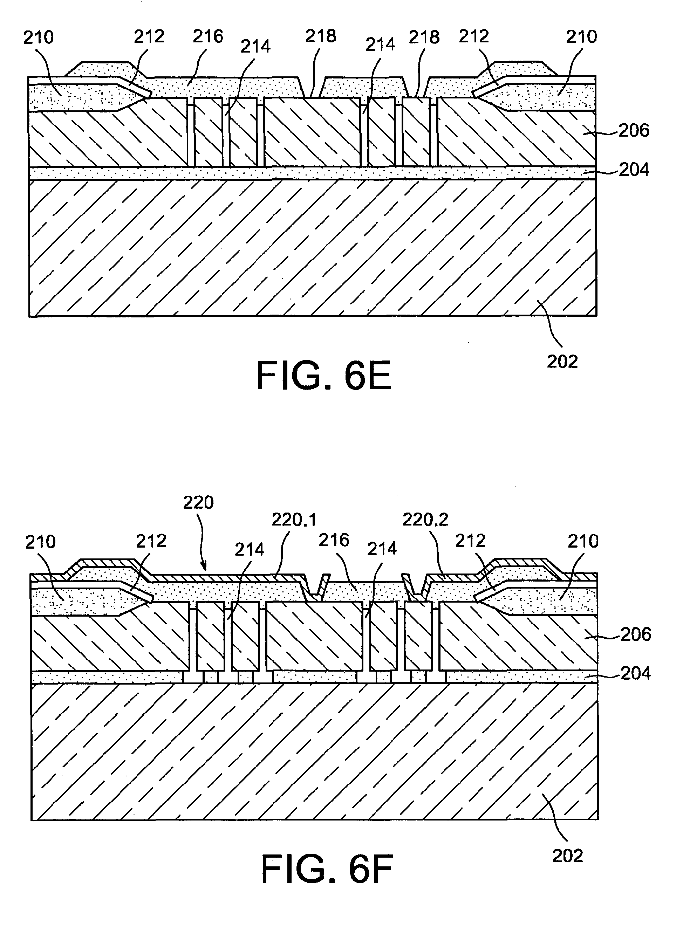

Enfin un décapage de la surface est effectué. L'élément obtenu est visible sur la figure 6E.

Lors d'une étape suivante, on réalise un dépôt d'une couche conductrice 220 destinée à former l'électrode suspendue ainsi que les pistes électriques.

Pour cela on effectue un dépôt de polysilicium sur la couche de PSG 216.

Une couche de résine est déposée sur cette couche de polysilicium 220; une lithographie de la résine est ensuite effectuée. Enfin la couche de polysilicium 220 est gravée. Un décapage de la surface est effectué pour retirer le masque de résine.

L'élément obtenu est visible sur la figure 6F, sur laquelle on peut voir la partie 220.1 de la couche de polysilicium 220 destinée à former l'électrode et la partie 220.2 de la couche de polysilicium 220 destinée à former une piste électrique reliant la partie mobile au plot de contact.

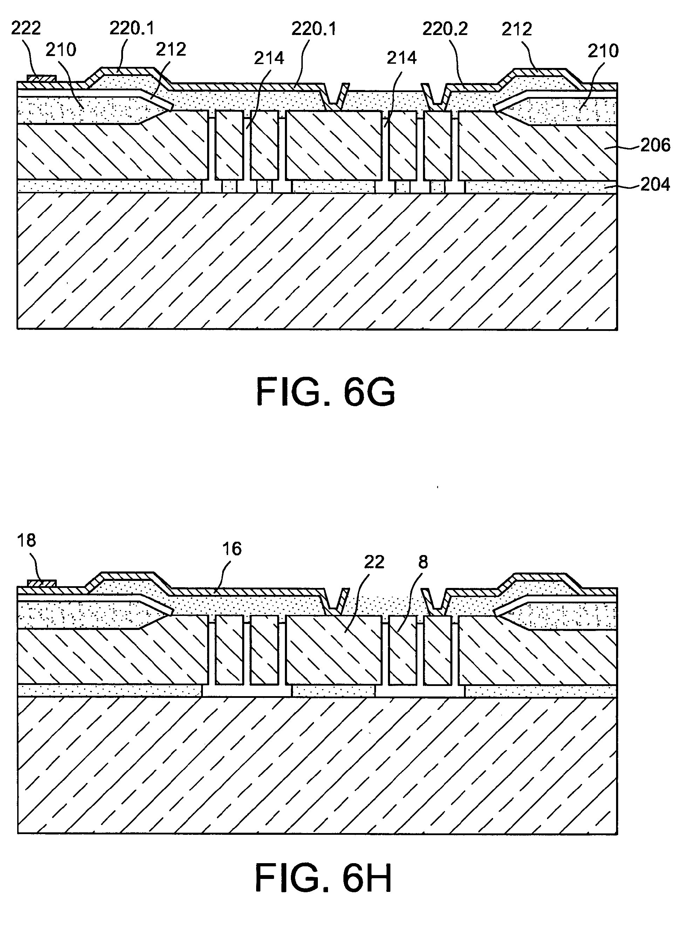

Lors d'une étape suivante, on réalise les plots de contact 18. On effectue pour cela un dépôt d'une couche métallique sur la couche de polysilicium par exemple en AlSi. Une couche de résine est ensuite déposée sur cette couche métallique et une lithographie de la résine a lieu, enfin on réalise la gravure de cette couche métallique. Pour terminer, un décapage pour retirer la résine est effectué. L'élément obtenu est visible sur la figure 6G.

Lors d'une dernière étape, on libère la masse inertielle, l'électrode suspendue 16 et les pistes électriques. Pour cela, on réalise une gravure humide de la couche de PSG 216 ainsi qu'une gravure de l'oxyde SiO$_2$ enterré 204, par exemple avec de l'acide fluorhydrique vapeur. Cette dernière gravure est par exemple une gravure au temps. L'élément obtenu est visible sur la figure 6H, sur laquelle on peut voir l'électrode 16 suspendue au moyen d'un pilier 22 et la partie de détection 8 ainsi que la piste électrique reliant la partie de détection à un plot de contact (non visible).

Dans le procédé décrit ci-dessus, la dimension des côtés des piliers est supérieure à deux fois la distance de libération, correspondant à la largeur de la gravure selon une direction contenue dans le plan.

Grâce à la présente invention, le gyromètre à détection de rotation d'axe dans le plan présente des capacités parasites réduites et peut être fabriqué de manière simplifiée par rapport aux gyromètres de l'état de la technique.

## Revendications

1. Gyromètre comportant un substrat et une masse inertielle (2, 102) suspendue au dessus du substrat, la masse inertielle (2, 102) comportant au moins une partie d'excitation (6, 106) et au moins une partie de détection (8, 108), des moyens de mise en mouvement de la partie d'excitation (6, 106) dans au moins une direction (X) contenue dans le plan de la dite masse inertielle (2, 102), et des moyens de détection capacitifs du mouvement de ladite partie de détection (8, 108) en dehors du plan de ladite masse, lesdits moyens de détection capacitifs comportant au moins une électrode suspendue (16, 116.1, 116.2), dite électrode de détection, disposée au-dessus de la partie de détection (8, 108) qui est située à l'opposé du substrat de sorte à former un condensateur à capacité variable avec ladite partie de détection (8, 108), **caractérisé en ce que** ladite électrode de détection (16, 116.1, 116.2) est maintenue au-dessus de ladite partie de détection (8, 108) par au moins un pilier (22, 22') traversant la masse inertielle (2, 102).

2. Gyromètre selon la revendication 1, dans lequel la projection selon un axe (Z) perpendiculaire au plan de ladite masse inertielle, de chaque point de l'électrode de détection (16, 116.1, 116.2), sur ledit plan, se situe dans la partie de détection (8, 108).

3. Gyromètre selon la revendication 2, dans lequel l'électrode de détection (16, 116.1, 116.2) présente une surface sensiblement égale à celle de la partie de détection.

4. Gyromètre selon l'une des revendications 1 à 3, comportant un ou des passage (s) (23, 23'), par lesquels le ou les piliers (22, 22') traversent la partie de détection (8, 108) et/ou traversent la partie d'excitation dans des zones adjacentes aux bords de la partie de détection.

5. Gyromètre selon la revendication 4, dans lequel le jeu entre les bords parallèles des piliers (22, 22') et des passages (23, 23') dans la direction d'excitation est de 0,5 $\mu$m à 1 $\mu$m supérieur à l'amplitude d'excitation et dans lequel les piliers (22, 22') présentent des côtés mesurant entre 10 µm et 100 µm et le jeu entre les bords parallèles des piliers (22, 22') et des passages (23, 23') est compris entre 1 µm à 10 µm.

**6.** Gyromètre selon l'une des revendications 1 à 5, dans lequel la masse inertielle (102) comporte une partie d'excitation (106) et au moins deux parties de détection, une première partie de détection (108) apte à se déplacer le long de la direction d'excitation (X) par l'intermédiaire de la partie d'excitation (106) et une deuxième partie de détection (109) immobilisée dans le direction d'excitation (X) et solidaire en mouvement de la première partie de détection (108).

**7.** Gyromètre selon la revendication 6, dans lequel le ou les piliers traversent la deuxième partie de détection (109).

**8.** Gyromètre selon l'une des revendications 1 à 7, dans lequel la masse inertielle comporte au moins deux parties de détection, l'électrode de détection étant disposée au-dessus de l'une ou l'autre des parties de détection.

**9.** Gyromètre selon l'une des revendications 1 à 7 dans lequel la masse inertielle comporte au moins deux parties de détection destinées à résonner en phase, l'électrode de détection étant disposée au-dessus des deux parties de détection.

**10.** Gyromètre selon l'une des revendications 1 à 7, dans lequel la masse inertielle comporte au moins deux parties de détection destinées à résonner en anti-phase, ledit gyromètre comportant deux électrodes de détection disposées chacune au-dessus d'une partie de détection, les deux électrodes de détection détectant séparément les déplacements des parties de détection en regard de celles-ci.

**11.** Gyromètre selon l'une des revendications 1 à 10, comportant deux masses inertielles couplées mécaniquement au moins selon un mode d'excitation et deux électrodes de détection disposées chacune au dessus d'une partie de détection de chacune des masses inertielles, les deux électrodes de détection détectant séparément les déplacements des parties de détection en regard de celles-ci.

**12.** Gyromètre selon l'une des revendications 1 à 5 ou 8 à 11, dans lequel la masse inertielle comporte une partie d'excitation (306) en forme de disque, ladite partie d'excitation (306) étant mobile autour de l'axe dudit disque, et plusieurs parties de détection (308) montées mobiles à l'intérieur de la partie d'excitation (306).

**13.** Système de mesure comportant au moins un gyromètre selon l'une de revendication 1 à 12 et en outre au moins un accéléromètre et/ou un gyromètre de détection de rotations d'axe hors plan.

**14.** Système de mesure selon la revendication 13, dans lequel le gyromètre de détection de rotations d'axe hors plan comporte des électrodes de détection perpendiculaires au plan du gyromètre de détection de rotations d'axe hors plan pour détecter le déplacement dans le plan de ladite au moins une partie de détection du gyromètre de détection de rotations d'axe hors plan.

**15.** Système de mesure selon la revendication 13 ou 14, dans lequel l'accéléromètre est un accéléromètre capacitif destiné à détecter des accélérations hors plan et comportant au moins une électrode de détection d'une accélération hors plan, contenue dans le plan et/ou un accéléromètre capacitif destiné à détecter des accélérations dans le plan et comportant au moins une électrode perpendiculaire au plan.

**16.** Procédé de réalisation d'un gyromètre selon l'une des revendications 1 à 12 ou d'un système selon l'une des revendications 13 à 15, comportant, à partir d'un élément comprenant une couche d'oxyde déposée (204) sur un substrat (202) et recouverte d'une couche active (206), les étapes :

- dépôt d'une première couche de protection (208) de la couche active (206) contre l'oxydation,
- gravure de la couche de protection (208) pour libérer la couche active (206) en au moins une première zone,
- oxydation thermique et croissance de l'oxyde au niveau de la première zone de la couche active libérée de sorte à former une surépaisseur (210) d'oxyde au niveau de ladite première zone,
- dépôt d'une deuxième couche de protection (212) sur la surépaisseur (210) d'oxyde,
- gravure de la couche active (206) pour former des tranchées (214) atteignant la couche d'oxyde (204),
- dépôt d'une couche de bouchage (216) recouvrant la couche active (206) et obturant les tranchées (214),
- gravure de ladite couche de bouchage (216) pour libérer au moins une deuxième zone de la couche active (206),
- formation de l'électrode de détection de sorte que l'électrode repose sur ladite deuxième zone,
- libération de la masse inertielle et de l'électrode.

**17.** Procédé de réalisation selon la revendication 16, dans lequel la première (208) et/ou la deuxième (212) couche de protection est (sont) en $Si_3N_4$.

18. Procédé de réalisation selon la revendication 16 ou 17, dans lequel la couche de bouchage (216) recouvrant la couche active (206) et obturant les tranchées (214) est en verre de silice phosphorée.

19. Procédé de réalisation selon l'une des revendications 16 à 18, comportant une étape de réalisation d'au moins un plot de contact (18), après la réalisation de l'électrode de détection et d'au moins une piste conductrice électrique non suspendue reliée à l'électrode de détection, le plot de contact étant réalisé sur la piste conductrice, de préférence la piste conductrice électrique étant réalisée simultanément à la réalisation de l'électrode de détection.

20. Procédé selon les revendications 18 ou 19 comme dépendant de la revendication 18, dans lequel l'étape de libération est obtenue au moyen d'une gravure humide du verre de silice phosphorée et d'une gravure de la couche d'oxyde.

**Patentansprüche**

1. Gyrometer, umfassend ein Substrat und eine oberhalb des Substrats aufgehängte träge Masse (2, 102), wobei die träge Masse (2, 102) wenigstens einen Anregungsteil (6, 106) und wenigstens einen Erfassungsteil (8, 108) umfasst, Mittel, um den Anregungsteil (6, 106) in wenigstens eine in der Ebene der trägen Masse (2, 102) enthaltene Richtung (X) in Bewegung zu setzen, und kapazitive Erfassungsmittel für die Bewegung von dem Erfassungsteil (8, 108) außerhalb der Ebene der Masse,
wobei die kapazitiven Erfassungsmittel wenigstens eine als Erfassungselektrode bezeichnete, aufgehängte Elektrode (16, 116.1, 116.2) umfassen, die oberhalb von dem Erfassungsteil (8, 108) angeordnet ist, welcher sich gegenüber von dem Substrat befindet, so dass zusammen mit dem Erfassungsteil (8, 108) ein Kondensator mit variabler Kapazität gebildet wird,
**dadurch gekennzeichnet, dass** die Erfassungselektrode (16, 116.1, 116.2) oberhalb von dem Erfassungsteil (8, 108) durch wenigstens einen Pfeiler (22, 22') gehalten wird, welcher die träge Masse (2, 102) durchquert.

2. Gyrometer nach Anspruch 1, wobei die Projektion von jedem Punkt der Erfassungselektrode (16, 116.1, 116.2) längs einer Achse (Z) senkrecht zur Ebene der trägen Masse auf diese Ebene sich in dem Erfassungsteil (8, 108) befindet.

3. Gyrometer nach Anspruch 2, wobei die Erfassungselektrode (16, 116.1, 116.2) eine Fläche aufweist, die im Wesentlichen gleich derjenigen von dem Erfassungsteil ist.

4. Gyrometer nach einem der Ansprüche 1 bis 3, umfassend einen oder mehrere Durchgänge (23, 23'), durch welche(n) der oder die Pfeiler (22, 22') den Erfassungsteil (8, 108) durchquert/durchqueren oder/und den Anregungsteil in Bereichen benachbart zu den Rändern von dem Erfassungsteil durchquert/durchqueren.

5. Gyrometer nach Anspruch 4, wobei das Spiel zwischen den parallelen Rändern der Pfeiler (22, 22') und den Durchgängen (23, 23') in der Anregungsrichtung um 0,5 $\mu$m bis 1 $\mu$m größer ist als die Anregungsamplitude, und wobei die Pfeiler (22, 22') Seiten aufweisen, die zwischen 10 $\mu$m und 100 $\mu$m messen, und das Spiel zwischen den parallelen Rändern der Pfeiler (22, 22') und den Durchgängen (23, 23') zwischen 1 $\mu$m und 10 $\mu$m liegt.

6. Gyrometer nach einem der Ansprüche 1 bis 5, wobei die träge Masse (102) einen Anregungsteil (106) und wenigstens zwei Erfassungsteile umfasst, wobei ein erster Erfassungsteil (108) dazu geeignet ist, sich vermittels dem Anregungsteil (106) längs der Anregungsrichtung (X) zu verlagern, und ein zweiter Erfassungsteil (109) in der Anregungsrichtung (X) immobilisiert ist und zur gemeinsamen Bewegung mit dem ersten Erfassungsteil (108) verbunden ist.

7. Gyrometer nach Anspruch 6, wobei der oder die Pfeiler den zweiten Erfassungsteil (109) durchquert bzw. durchqueren.

8. Gyrometer nach einem der Ansprüche 1 bis 7, wobei die träge Masse wenigstens zwei Erfassungsteile umfasst, wobei die Erfassungselektrode oberhalb von dem einen oder dem anderen der Erfassungsteile angeordnet ist.

9. Gyrometer nach einem der Ansprüche 1 bis 7, wobei die träge Masse wenigstens zwei Erfassungsteile umfasst, die dazu bestimmt sind, in Phase zu schwingen, wobei die Erfassungselektrode oberhalb der zwei Erfassungsteile angeordnet ist.

10. Gyrometer nach einem der Ansprüche 1 bis 7, wobei die träge Masse wenigstens zwei Erfassungsteile umfasst, die dazu bestimmt sind, in Gegenphase zu schwingen, wobei das Gyrometer zwei Erfassungselektroden umfasst, die jeweils oberhalb von einem Erfassungsteil angeordnet sind, wobei die zwei Erfassungselektroden die Verlagerungen der Erfassungsteile in Bezug auf diese separat erfassen.

11. Gyrometer nach einem der Ansprüche 1 bis 10, umfassend zwei träge Massen, die mechanisch wenigstens gemäß einer Anregungsmode gekoppelt sind, und zwei Erfassungselektroden, die jeweils oberhalb von einem Erfassungsteil von jeder der trägen Massen angeordnet sind, wobei die zwei Erfassungselektroden die Verlagerungen der Erfassungsteile in Bezug auf diese separat erfassen.

12. Gyrometer nach einem der Ansprüche 1 bis 5 oder 8 bis 11, wobei die träge Masse einen Anregungsteil (306) in Form einer Scheibe umfasst, wobei der Anregungsteil (306) um die Achse der Scheibe herum beweglich ist, und mehrere Erfassungsteile (308) umfasst, die beweglich im Inneren von dem Anregungsteil (306) angebracht sind.

13. Messsystem, umfassend wenigstens ein Gyrometer nach einem der Ansprüche 1 bis 12 und weiterhin wenigstens eine Beschleunigung-Messeinrichtung oder/und ein Gyrometer zur Erfassung von Rotationen um eine Achse außerhalb der Ebene.

14. Messsystem nach Anspruch 13, wobei das Gyrometer zur Erfassung von Rotationen um eine Achse außerhalb der Ebene Erfassungselektroden senkrecht zur Ebene des Gyrometers zur Erfassung von Rotationen um eine Achse außerhalb der Ebene umfasst, um die Verlagerung in der Ebene von dem wenigstens einen Erfassungsteil des Gyrometers zur Erfassung von Rotationen um eine Achse außerhalb der Ebene zu erfassen.

15. Messsystem nach Anspruch 13 oder 14, wobei die Beschleunigung-Messeinrichtung eine kapazitive Beschleunigung-Messeinrichtung ist, die dazu bestimmt ist, Beschleunigungen außerhalb der Ebene zu erfassen, und sie umfasst mindestens eine in der Ebene enthaltene Erfassungselektrode für eine Beschleunigung außerhalb der Ebene, oder/und eine kapazitive Beschleunigung-Messeinrichtung, die dazu bestimmt ist, Beschleunigungen in der Ebene zu erfassen und die wenigstens eine zur Ebene senkrechte Elektrode umfasst.

16. Herstellungsverfahren für ein Gyrometer nach einem der Ansprüche 1 bis 12 oder für ein System nach einem der Ansprüche 13 bis 15, umfassend, ausgehend von einem Element, welches eine auf einem Substrat (202) aufgebrachte und mit einer aktiven Schicht (206) bedeckte Oxidschicht (204) umfasst, die Schritte:

Aufbringen einer ersten Schutzschicht (208) zum Schutz der aktiven Schicht (206) gegen Oxidation,
Ätzen der Schutzschicht (208), um die aktive Schicht (206) in wenigstens einem ersten Bereich freizulegen,
thermisches Oxidieren und Wachsen des Oxids auf Höhe des ersten Bereichs der freigelegten aktiven Schicht, um eine Oxid-Verdickung (210) auf Höhe des ersten Bereichs zu bilden,
Aufbringen einer zweiten Schutzschicht (212) auf die Oxid-Verdickung (210),
Ätzen der aktiven Schicht (206), um Gräben (214) zu bilden, welche die Oxidschicht (204) erreichen,
Aufbringen einer Verschlussschicht (216), welche die aktive Schicht (206) bedeckt und die Gräben (214) verschließt,
Ätzen der Verschlussschicht (216), um wenigstens einen zweiten Bereich der aktiven Schicht (206) freizulegen,
Bilden der Erfassungselektrode, so dass die Elektrode auf dem zweiten Bereich ruht,
Freilegen der trägen Masse und der Elektrode.

17. Herstellungsverfahren nach Anspruch 16, wobei die erste (208) oder/und die zweite (212) Schutzschicht aus $Si_3N_4$ besteht/bestehen.

18. Herstellungsverfahren nach Anspruch 16 oder 17, wobei die Verschlussschicht (216), welche die aktive Schicht (206) abdeckt und die Gräben (214) verschließt aus Phosphorsilikatglas besteht.

19. Herstellungsverfahren nach einem der Ansprüche 16 bis 18, umfassend einen Schritt zur Herstellung von wenigstens einem Kontaktpad (18) nach der Herstellung der Erfassungselektrode und wenigstens eines nicht aufgehängten, elektrisch leitfähigen Pfads, der mit der Erfassungselektrode verbunden ist, wobei das Kontaktpad auf dem leitfähigen Pfad hergestellt wird, wobei bevorzugt der elektrisch leitfähige Pfad gleichzeitig mit der Herstellung der Erfassungselektrode hergestellt wird.

20. Verfahren nach den Ansprüchen 18 oder 19, rückbezogen auf 18, wobei der Schritt zur Freilegung vermittels eines feuchten Ätzens von dem Phosphorsilikatglas und eines Ätzens der Oxidschicht erhalten wird.

**Claims**

1. Gyrometer comprising a substrate and an inertial mass (2, 102) suspended above the substrate, the inertial mass (2, 102) comprising at least one excitation part (6, 106) and at least one detection part (8, 108), means of moving the excitation part (6, 106) in at least one direction (X) contained in the plane of said inertial mass (2, 102), and capacitive detection means for detecting movement of said detection part (8, 108) outside the plane of said mass, said capacitive detection means comprising at least one suspended electrode (16, 116.1, 116.2), called the detection electrode, located above the detection part (8, 108) located facing the substrate so as to form a variable capacitor with said detection part (8, 108), **characterised in that** said detection electrode (16, 116.1, 116.2) is held above said detection part (8, 108) by at least one pillar (22, 22') passing through the inertial mass (2, 102).

2. Gyrometer according to claim 1, in which the projection along an axis (Z) perpendicular to the plane of said inertial mass of each point on the detection electrode (16, 116.1, 116.2) on said plane is located in the detection part (8, 108).

3. Gyrometer according to claim 2, in which the detection electrode (16, 116.1, 116.2) has a surface area approximately equal to the surface area of the detection part.

4. Gyrometer according to one of claims 1 to 3, comprising one or more passages (23, 23'), through which the pillar(s) (22, 22') pass through the detection part (8, 108) and/or the excitation part in zones adjacent to the edges of the detection part.

5. Gyrometer according to claim 4, in which the clearance between the parallel edges of the pillars (22, 22') and the passages (23, 23') in the excitation direction is equal to 0.5 $\mu$m to 1 $\mu$m more than the excitation amplitude and in which the sides of the pillars (22, 22') are between 10 $\mu$m and 100$\mu$m and the clearance between the parallel edges of the pillars (22, 22') and the passages (23, 23') is between 1 $\mu$m and 10 $\mu$m.

6. Gyrometer according to one of claims 1 to 5, in which the inertial mass (102) comprises an excitation part (106) and at least two detection parts, a first detection part (108) capable of moving along the excitation direction (X) through the excitation part (106) and a second detection part (109) fixed in position in the excitation direction (X) and fixed in movement to the first detection part (108).

7. Gyrometer according to claim 7, in which the pillar (s) pass through the second detection part (109).

8. Gyrometer according to one of claims 1 to 8, in which the inertial mass comprises at least two detection parts, the detection electrode being located above one of the detection parts.

9. Gyrometer according to one of claims 1 to 7, in which the inertial mass comprises at least two detection parts that will resonate in phase, the detection electrode being located above the two detection parts.

10. Gyrometer according to one of claims 1 to 7, in which the inertial mass comprises at least two detection parts that will resonate in anti-phase, said gyrometer comprising two detection electrodes each located above a detection part, the two detection electrodes separately detecting displacements of the detection parts facing them.

11. Gyrometer according to one of claims 1 to 10, comprising two mechanically coupled inertial masses, at least for one excitation mode and two detection electrodes each arranged above a detection part of each inertial mass, the two detection electrodes separately detecting displacements of detection parts facing them.

12. Gyrometer according to one of claims 1 to 5 or 8 to 11, in which the inertial mass comprises a disk-shaped excitation part(306), said excitation part (306) being free to move about the axis of said disk, and several detection parts (308) arranged to be free to move inside the excitation part (306).

13. Measurement system comprising at least a gyrometer according to one of claims 1 to 14 and also at least one accelerometer and/or a gyrometer to detect rotations about an axis outside the plane.

14. Measurement system according to claim 13, in which the gyrometer to detect rotations about an axis outside the plane comprises detection electrodes perpendicular to the plane of the gyrometer to detect rotations about an axis outside the plane to detect displacement in the plane of said at least one detection part of the gyrometer that detects rotations about an axis outside the plane.

15. Measurement system according to claim 13 or 14, in which the accelerometer is a capacitive accelerometer that will detect out-of-plane accelerations and comprising at least one electrode for detecting an out-of-plane acceleration, contained in the plane and/or a capacitive accelerometer that will detect in-plane accelerations and comprising at least one electrode perpendicular to the plane.

16. Process for fabricating a gyrometer according to one of claims 1 to 12 or a measurement system according to one of claims 13 to 14, comprising the following steps starting from an element including an oxide layer (204) deposited on a substrate (202) and covered with an active layer (206):

   - deposition of a first protective layer (208) protecting the active layer (206) against oxidation,
   - etching of the protective layer (208) to release the active layer (206) in at least a first zone,
   - thermal oxidation and growth of the oxide at the first zone in the released active layer, so as to form an oxide overthickness (210) at said first zone,
- deposition of a second protective layer (212) on the oxide overthickness (210),
- etching of the active layer (206) to form trenches (214) that reach the oxide layer (204),
- deposition of a closing off layer (216) covering the active layer (206) and closing off the trenches (214),
- etching of said closing off layer (216) to release at least one second zone of the active layer (206),
- formation of the detection electrode such that the electrode is supported on said second zone,
- release of the inertial mass and the electrode.

17. Fabrication method according to claim 16, in which the first (208) and/or the second (212) protective layer(s) is (are) made of $Si_3N_4$.

18. Fabrication method according to claim 16 or 17, in which the closing off layer (216) covering the active layer (206) and closing the trenches (214) is made of phosphorus silicate glass.

19. Fabrication process according to one of claims 16 to 18, in which the element is a silicon on insulator substrate and the detection electrode is made of polysilicon.

20. Method according to claims 18 or 19 in combination with claim 18, in which the release step is obtained by wet etching of the phosphorus silicate glass and etching of the oxide layer.

G1

z

y

x

10          2          10

22

8

4

10          6          23          10

# FIG. 1A

18          G1          16          22          23

8

2

# FIG. 1B

FIG. 2

FIG. 3A

FIG. 3B

FIG. 3C

FIG. 4

FIG. 5A

FIG. 5B

FIG. 5C

G4

302

322

316

306

316

308

322

Y

Z

X

# FIG. 7

204

206

## FIG. 6A

202

210

204    208    206

202

## FIG. 6B

202

**FIG. 6C**

**FIG. 6D**

FIG. 6E

FIG. 6F

FIG. 6G

FIG. 6H

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090241662 A

- US 20080236280 A

**Littérature non-brevet citée dans la description**

- **P. MERZ et al.** Impact Of Si DRIE On Vibratory MEMS Gyroscope Performance. *TRANSDUCERS & EUROSENSORS '07,* 2007, 1187-1190

- **T. TSUCHIYA et al.** Vibrating gyroscope consisting of three layers of polysilicon thin films. *Sensors and Actuators,* 2000, vol. 82, 114-119